# FASCICULE DE BREVET EUROPEEN

(11) **EP 0 470 010 B1**
(45) Date de publication et mention de la délivrance du brevet: **18.01.1995**
(21) Numéro de dépôt: 91420239.5
(22) Date de dépôt: 10.07.1991
(51) Int. Cl.: H02B 1/06

(54) **Coffret étanche d'appareillage électrique**
Geschlossener Kasten für elektrische Apparatur
Sealed switch box for electrical apparatus

(30) Priorité: 30.07.1990 FR 9009810
(43) Date de publication de la demande: 05.02.1992
(73) Titulaire: MERLIN GERIN, F-38240 Meylan (FR)
(72) Inventeur: Balaud, Philippe, F-38050 Grenoble Cédex (FR); Velletaz, Gilbert, F-38050 Grenoble Cédex (FR)
(74) Mandataire: Ritzenthaler, Jacques

(56) Documents cités:
- EP-A- 0 038 934
- DE-U- 8 308 793
- FR-A- 2 190 328

## Description

L'invention est relative à un coffret étanche en matière plastique de logement d'appareillage électrique modulaire comprenant un boîtier inférieur avec un rail à profil symétrique de fixation par encliquetage des appareils modulaires, et un couvercle supérieur qui s'emboîte d'une manière étanche sur le boîtier et qui a sur l'avant une ouverture de passage des faces antérieures desdits appareils portant les manettes de commande et un capot ou fenêtre susceptible de coiffer d'une manière étanche, en position fermée, ladite ouverture et les manettes et en position ouverte de donner accès aux manettes.

Un coffret étanche, du genre mentionné, généralement disposé à l'extérieur, assure la protection contre les intempéries et les interventions externes, des appareils électriques logés dans le coffret. Leur emploi est de plus en plus fréquent, et il est donc indispensable d'en réduire le coût de fabrication tout en conservant les qualités d'étanchéité et d'inviolabilité. Un tel coffret est constitué de trois parties de base, en l'occurrence un boîtier inférieur, formant le fond du coffret et portant les appareils modulaires, un couvercle supérieur mis en place après le câblage des appareils modulaires, et laissant accès uniquement aux parties frontales des appareils, et un capot ou une fenêtre pouvant être ouverte pour donner accès aux manettes de commande des appareils. Le boîtier inférieur et le couvercle supérieur sont assemblés par des vis avec interposition d'un joint d'étanchéité, ces parties n'étant démontées que lors d'une intervention sur le câblage, ou sur un appareil logé dans le boîtier. Le capot ou fenêtre doit par contre être ouvert à chaque manoeuvre et son dispositif de verrouillage et d'étanchéité doit être adapté à ces manipulations fréquentes.

La présente invention a pour but de permettre la réalisation d'un dispositif de verrouillage simplifié permettant un maintien efficace en position fermée de la fenêtre, tout en permettant un actionnement aisé du verrou.

Le coffret selon la présente invention est caractérisé en ce que l'un des bords du capot est articulé audit couvercle à l'extérieur du périmètre de l'ouverture, et que le bord opposé porte une patte également à l'extérieur de l'ouverture, de support d'un bouton de verrouillage ayant un pène s'engageant sous un rebord du couvercle en position de verrouillage dudit bouton, que ladite patte présente un évidement en forme de glissière ou de tiroir dans lequel ledit bouton est monté à coulissement, suivant une direction perpendiculaire audit bord opposé, par deux doigts engagés dans ledit évidement et s'étendant dans ladite direction en présentant une élasticité de rapprochement ou d'écartement, que chaque doigt comporte un bec d'extrémité, qui coopère avec une rampe agencée sur le bord de la glissière et ayant un point d'inversion de façon que la mise en place du bouton sur la patte, par insertion des doigts dans ledit évidement, provoque jusqu'au point d'inversion, un rapprochement des doigts et au delà du point d'inversion, un écartement élastique des doigts, lequel écartement sollicite, le bouton en position de verrouillage et qu'une butée limite la course de retour du bouton, en direction opposée de déverrouillage, afin d'empêcher le franchissement dudit point d'inversion et de conserver une force de rappel du bouton en position de verrouillage.

La fenêtre porte une patte évidée dans laquelle peuvent être emboîtés deux doigts flexibles, portés par le bouton de verrouillage. Ces doigts coopèrent avec des rampes de manière à maintenir le verrou fixé à la fenêtre, tout en assurant le rappel en position de verrouillage du bouton. La course de déverrouillage du bouton est limitée par une ou plusieurs languettes élastiques qui s'effacent lors de la mise en place du bouton, et s'encliquète à l'arrière du pène porté par le bouton. Le bouton de verrouillage est une pièce en matière plastique moulé, qui en position montée est disposée dans le prolongement de la fenêtre à l'extérieur du périmètre de l'ouverture du couvercle. Ce verrou maintient efficacement la fenêtre en position d'appui contre le joint d'étanchéité encadrant l'ouverture, et un simple coulissement permet un déverrouillage et un pivotement en position ouverte de la fenêtre.

Le bouton de verrouillage porte un orifice de plombage qui vient en position fermée de la fenêtre, en regard d'un orifice conjugué, ménagé sur une patte du couvercle. La mise en place d'un fil de plombage empêche d'une part, le déplacement du bouton de verrouillage en direction de déverrouillage, et d'autre part maintient le verrou et la fenêtre assujettis au couvercle. L'une ou plusieurs des vis de fixation du couvercle au boîtier peuvent comporter un dispositif de plombage, réalisé selon un perfectionnement de l'invention par un orifice ménagé dans la tête de la vis, qui vient en regard d'un trou incurvé, ménagé dans le couvercle et éventuellement le boîtier. L'incurvation du trou fait déboucher ce dernier vers l'extérieur et guide le fil de plombage, qui peut être introduit à travers la tête de la vis, et ressort automatiquement vers l'extérieur. Le bouton de verrouillage présente sur sa face avant un évidement permettant l'introduction d'une serrure dont le pène coopère avec une partie conjuguée du couvercle. Le câblage du coffret peut être facilité par une échancrure ou une hauteur de paroi latérale réduite, qui permet la mise en place des câbles et leur connexion aux appareils. Les petites parois latérales du boîtier sont agencées en passe-câbles et comportent à cet effet, soit des parties défonçables, soit tout autre orifice obturable, et selon un perfectionnement de l'invention, le boîtier porte au voisinage de l'une ou des deux petites parois latérales, des demi colonnettes de fixation d'un bornier. La barre de connexion du bornier occupe toute la largeur du boîtier et elle est fixée à un support constitué par une barrette repliée en forme de cadre à base ouverte, fixée aux deux demi colonnettes. La barrette en forme de cadre peut bien entendu être remplacée par une pièce équivalente en matière plastique moulée, susceptible d'être fixée, par exemple par vissage aux deux demi colonnettes et constituant une rehausse de fixation de la barre de connexion, tout en libérant le passage des fils ou câbles d'entrée dans le coffret.

Le capot ou fenêtre est avantageusement en matière plastique transparente et le bouton de verrouillage est conformé en barre de même largeur que la fenêtre, et coiffant une partie du couvercle, externe au périmètre de l'ouverture de ce couvercle.

D'autres avantages ressortiront plus clairement de la description qui va suivre d'un mode de mise en oeuvre de l'invention donné à titre d'exemple non limitatif et représenté aux dessins annexés dans lesquels:

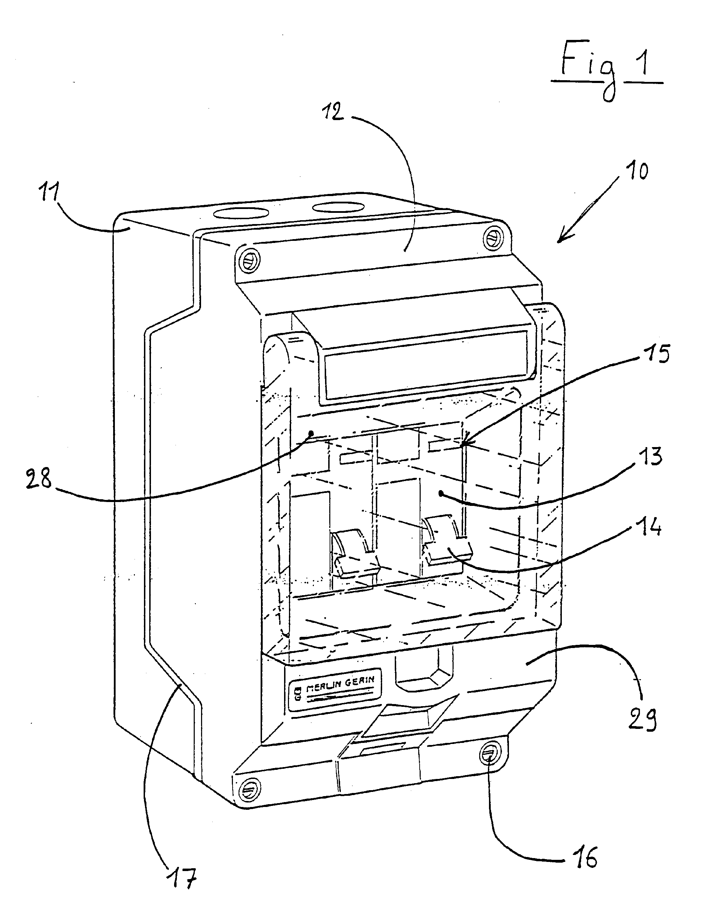

- la figure 1 est une vue schématique en perspective d'un coffret selon l'invention, la fenêtre étant représentée en position verrouillée;

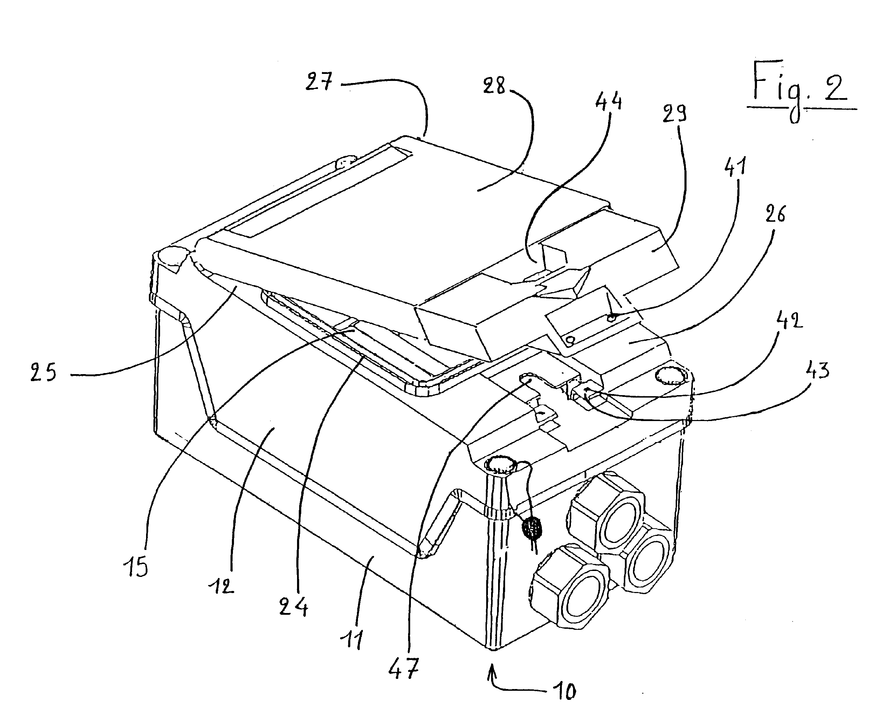

- la figure 2 est une vue analogue à celle de la figure 1, montrant la fenêtre en cours d'ouverture;
- les figures 3,4,5 et 6 sont des vues de dessous de l'extrémité de la fenêtre et du bouton de verrouillage, ce dernier étant représenté respectivement en cours de mise en place sur la fenêtre, à l'instant de passage du point d'inversion, en position fermée, et en position de déverrouillage;
- la figure 7 est une vue à échelle agrandie en coupe illustrant le plombage d'une vis de fixation du couvercle au boîtier;

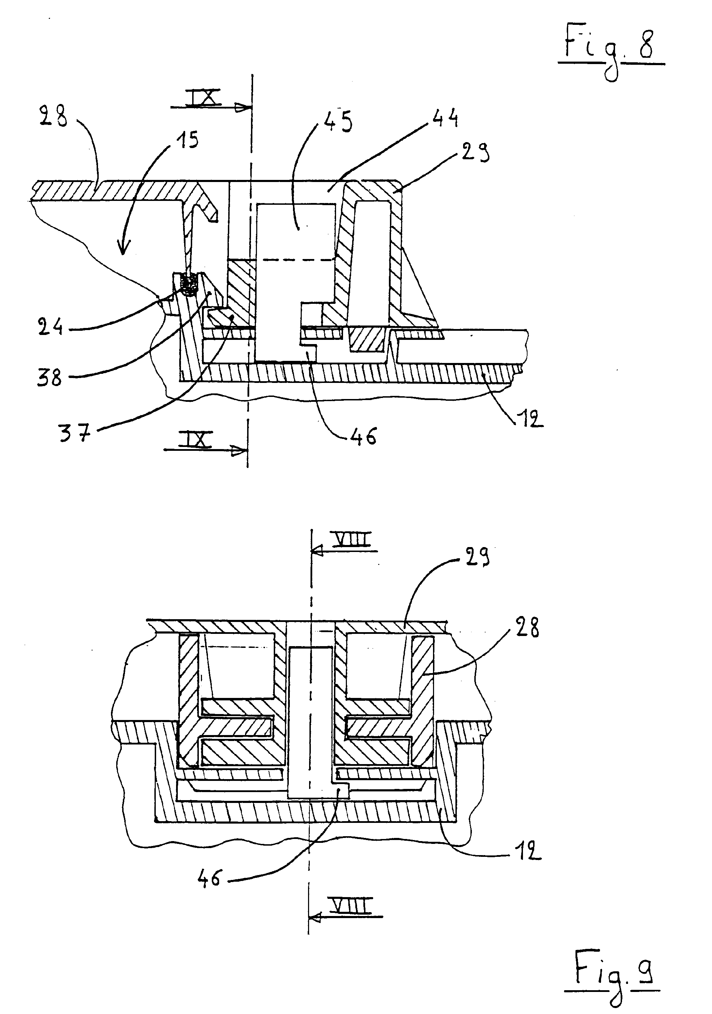

- la figure 8 est une vue en coupe selon la ligne VIII-VIII de la figure 9 du bouton de verrouillage, équipé d'une serrure représentée en position ouverte;
- la figure 9 est une coupe suivant la ligne IX-IX de la figure 8, la serrure étant représentée en position fermée;
- les figures 10 et 11 sont des vues en perspective du boîtier, équipé respectivement d'un support métallique d'un bornier de connexion, et d'un support en matière plastique du bornier.

Sur les figures, un coffret 10 en matière plastique moulé est constitué d'un boîtier 11 sur lequel est emboîté d'une manière étanche, un couvercle 12. Le boîtier 11 porte un rail à profil symétrique d'encliquetage d'appareils électriques modulaires 13, dont la face avant munie d'une manette 14, fait saillie d'une ouverture rectangulaire 15 ménagée dans le couvercle 12. Le couvercle 12 est fixé au boîtier 11 par quatre vis 16, et un joint d'étanchéité 17 est interposé entre le couvercle 12 et le boîtier 11, en étant logé dans une rainure périphérique 18 du boîtier 11. Le boîtier 11 comporte un fond 19 auquel se raccorde deux petites faces latérales 20, équipées d'orifices 21 de passage des câbles ou des fils reliés aux appareils 13, et deux grandes faces latérales 22. Les grandes faces latérales présentent une échancrure 23, réduisant dans la partie centrale la hauteur de ces parois pour faciliter la mise en place des câbles et leur connexion aux appareils 13 logés dans le boîtier. Le couvercle 12 est mis en place, après réalisation de ce câblage et montage des appareils 13, sur le rail à profil symétrique. Le couvercle 12 présente bien entendu une forme conjuguée de celle du boîtier 11, pour constituer en position fixée un boîtier 10 de forme générale parallélépipèdique.

En bordure de l'ouverture rectangulaire 15 du couvercle 12, est ménagée une bordure 24 en forme de cadre en saillie recevant un joint d'étanchéité, cette bordure occupant la quasi totalité de la largeur du couvercle 12, mais laissant subsister du côté de la longueur, de part et d'autre, des parties libres 25,26. L'une des parties libres 25 porte une articulation 27 d'un capot ou d'une fenêtre 28 susceptible de coiffer, en position rabattue, l'ouverture 15. Le capot 28 en matière plastique transparente, appelé par la suite fenêtre, est prolongé du côté opposé à l'articulation 27 par un bouton de verrouillage 29, venant coiffer la partie libre 26 du couvercle 12 en position fermée de la fenêtre 28.

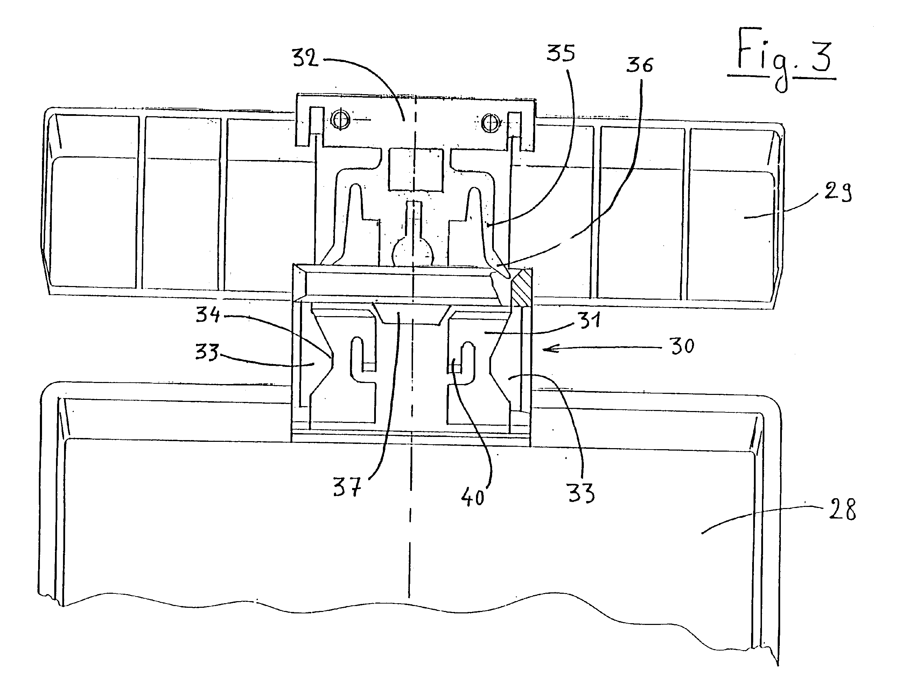

En se référant plus particulièrement aux figures 3 à 6, on voit que le bord opposé à l'articulation 27 de la fenêtre 28, porte sur la partie extérieure à la périphérie de l'ouverture 15, une patte de fixation 30 présentant un évidement en forme de tiroir 31 dans lequel vient s'emboîter une pièce conjuguée 32 du bouton de verrouillage 29. Les deux faces latérales du tiroir 31 sont agencées en rampe 33 ayant un point d'inversion 34 définissant un point de passage rétréci. La pièce 32 porte deux doigts en forme de languettes 35, dont les extrémités ou becs 36 coopèrent lors de l'introduction de la pièce 32 dans l'évidement 31, avec les rampes 33. La partie centrale de la pièce 32 est agencée en pène 37, dont l'extrémité coopère en position de verrouillage avec un bec 38, agencé sur la bordure 24 de l'ouverture 15. Le pène 37 présente sur sa partie arrière deux rebords 39, susceptibles de coopérer avec deux languettes élastiques 40, ménagées sur le fond de l'évidement 31. Ces languettes 40 s'effacent lors de l'introduction de la pièce 32 dans le tiroir 31, et reviennent élastiquement en position de butée, dès le franchissement des bords arrières 39 du pène 37. Ces languettes 40 constituent des butées limitant la course de retour en direction de déverrouillage du bouton 29. Dans le cas représenté sur les figures, d'une seule patte 30 et d'une seule pièce 32, ces dernières sont disposées dans l'axe central de la fenêtre 28 et du bouton 29, mais il est possible de prévoir deux pattes 30 et deux pièces 32 disposées symétriquement de l'axe longitudinal de la fenêtre 28.

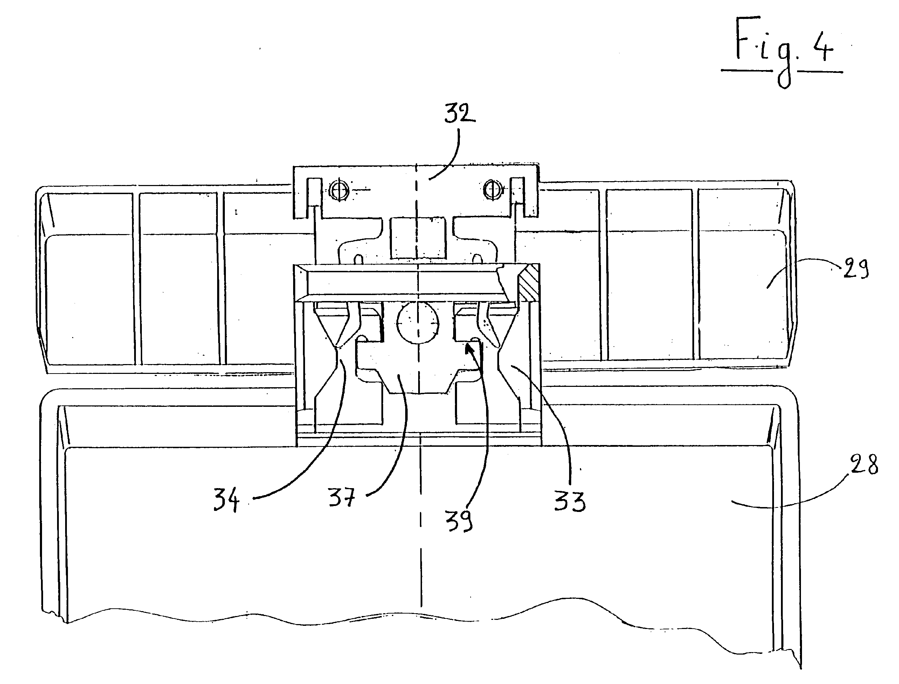

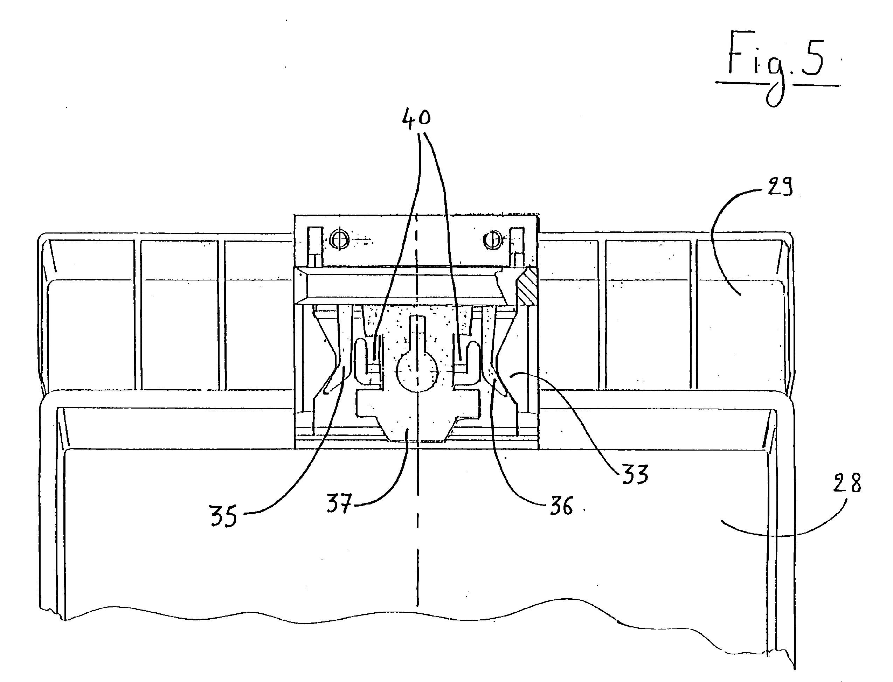

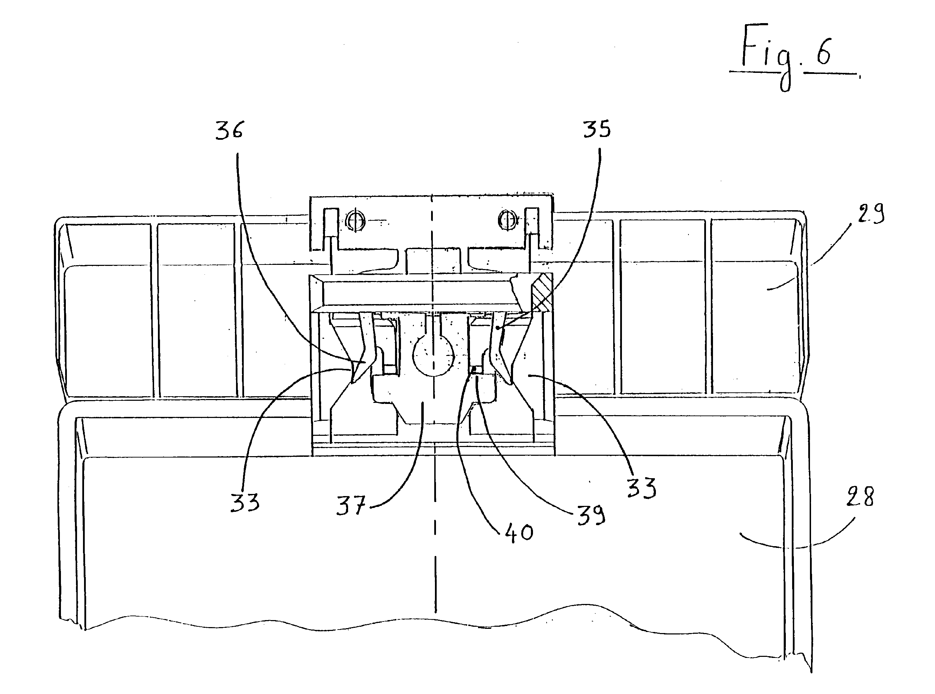

La mise en place du bouton de verrouillage 29 sur la fenêtre 28 est réalisée par emboîtement de la pièce 32 dans l'évidement 31, les becs d'extrémités 36 coopérant en un premier temps avec les rampes convergentes 33, de l'évidement 31, en se repliant élastiquement. (figures 3 et 4). Dès le franchissement du point d'inversion 34, les becs 36 coopèrent avec les parties divergentes des rampes 33 et sollicitent le bouton 29 en position d'accolage à la fenêtre 28, qui correspond à la position de verrouillage, le pène 37 s'engageant sous le bec 38 du couvercle 12. Au cours de ce mouvement de mise en place, les languettes élastiques 40 se sont en un premier temps repliées pour libérer le passage du pène 37, et par la suite sont revenues en position de butée, interférant avec la trajectoire des rebords 39 du pène 37. Dans la position de verrouillage du bouton 29, le fenêtre 28 est maintenue rigidement au contact du cadre 24 en assurant l'étanchéité de l'ouverture 15. Le déverrouillage de la fenêtre 28 est réalisé par un mouvement inverse du bouton 29 en direction de séparation de la fenêtre 28. Ce mouvement est limité par les languettes 40 qui engagent les bords arrières 39 du pène 37, cet engagement intervenant avant le franchissement du point d'inversion 34 par les becs 36. Dans cette position représentée par la figure 6, les doigts élastiques 35 exercent toujours une force de rappel en position de verrouillage sur le bouton 29 par leur action sur les parties divergentes des rampes 33. Cette action de rappel élastique est également maintenue dans la position de verrouillage représentée à la figure 5, les becs 36 étant toujours au contact des parties divergentes des rampes 33. Ce montage élastique du bouton 29 permet une fermeture de la fenêtre par simple rabattement, le pène 37 étant repoussé par la face inclinée du bec 38, et venant par la suite s'encliqueter sous ce bec, pour verrouiller la fenêtre 28.

Le bouton 29 porte un orifice de plombage 41, venant en position fermée de la fenêtre 28, en regard d'un orifice conjugué 42 ménagé sur une patte 43 du couvercle 12. La mise en place d'un fil de plombage empêche le déplacement du bouton 29 en direction de déverrouillage et solidarise le bouton 29, et de ce fait, la fenêtre 28 avec le couvercle 12.

La face antérieure du bouton 29 présente un logement 44, susceptible de recevoir une serrure 45 ayant une clé non représentée. Le pène 46 de la serrure 45 vient s'engager sous les bords d'une ouverture échancrée 47 du couvercle 12 pour solidariser le bouton 29 avec le couvercle 12. En position déverrouillée de la serrure 45, le pène 46 peut être séparé du couvercle 12 pour permettre le mouvement de déverrouillage du bouton 29.

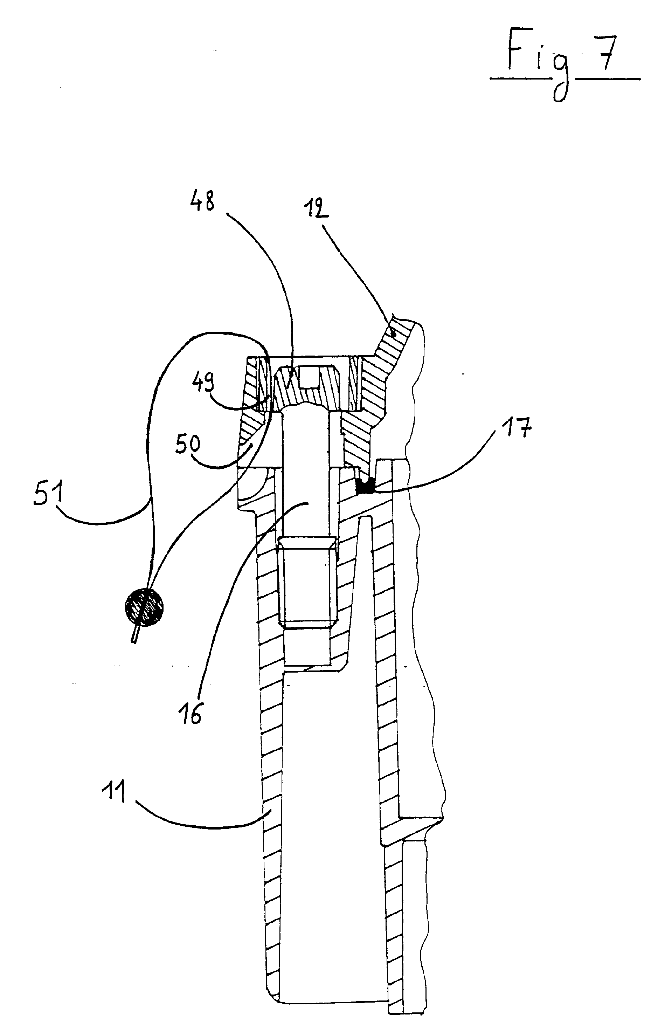

En se référant plus particulièrement à la figure 7, on voit que le couvercle 12 est fixé au boîtier 11 par des vis 16 dont la tête 48 présente un trou 49 de passage d'un fil de plombage. Le trou 49 dirigé en direction axiale de la vis 16 débouche dans un conduit 50 incurvé vers l'extérieur et ménagé dans le couvercle 12 et en prolongement dans le boîtier 11. On comprend qu'en enfilant le fil de plombage 51 dans la tête 48, l'extrémité de ce fil 51 est guidée par l'orifice incurvé 50 vers l'extérieur, où il est facilement attrapé et solidarisé à l'autre extrémité du fil. En plombant l'une ou plusieurs vis 16, ainsi que le bouton de verrouillage 29, le coffret 10 est inviolable.

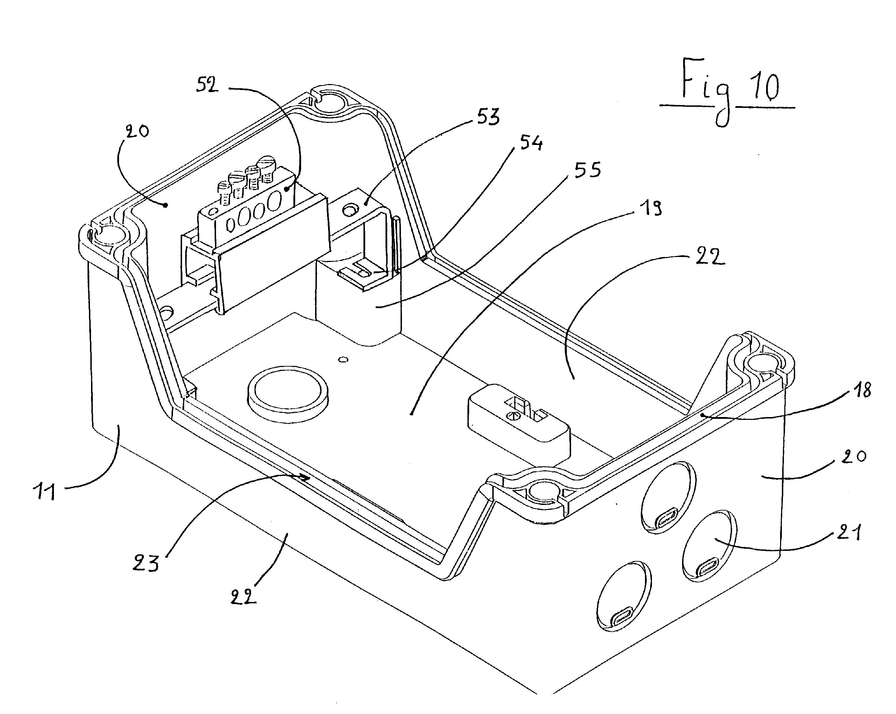

La figure 10 représente un dispositif de fixation d'un bornier 52 en forme de barrette, s'étendant le long d'une des petites parois latérales 20 du boîtier 11. Selon l'invention, le bornier 52 est encliqueté sur un support 53 constitué par un fer plat replié, pour constituer un cadre dont la base est ouverte. Ce cadre 53 est fixé par les pattes repliées 54 à des demies colonnettes solidaires du boîtier 11, et venant de moulage avec ce dernier. Il est facile de voir que ce mode de fixation, par exemple par des vis, permet de libérer toute la largeur du boîtier 11 pour la barrette 52, le fer plat 53 constituant en même temps une rehausse libérant le passage des câbles ou fils de connexion.

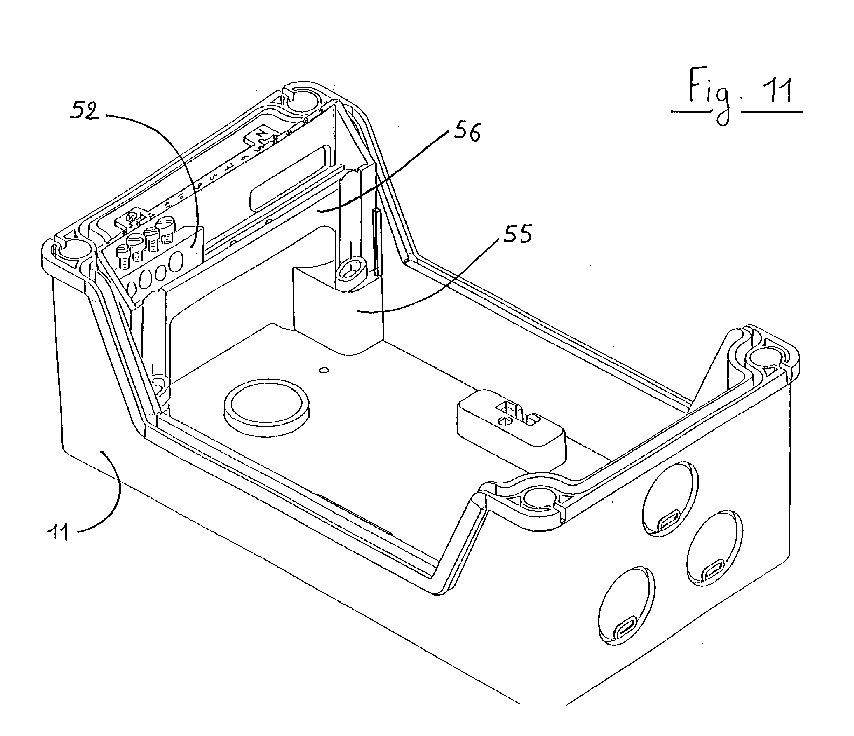

La figure 11 illustre une variante de réalisation d'un bornier réalisé par une pièce en matière plastique moulée 56, agencée pour constituer un cadre en forme d'étrier pouvant être vissé sur les demies colonnettes 55. La barrette de connexion 52 est fixée par encliquetage ou par tout autre moyen sur le support 56. Toute la largeur du boîtier 11 peut être occupée par le bornier 52.

Le coffret est constitué par un nombre limité de pièces en matière plastique moulée, le coût de fabrication et de montage étant relativement faible. L'étanchéité est assurée par les joints entre le boîtier et le couvercle, et entre le couvercle et la fenêtre. L'ouverture de la fenêtre 28 s'effectue par simple action sur le bouton 29, un ressort pouvant éventuellement déplacer la fenêtre 28 en position d'ouverture. La disposition du bouton 29 dans le prolongement de la fenêtre 28 en chevauchement de la partie libre 26, confère une esthétique particulière au coffret et évite toute saillie dangereuse.

La position du rail à profil symétrique est réglable en profondeur et peut occuper deux positions distinctes grace à des rehausses de fixation au fond du boîtier. Les rehausses sont avantageusement aménagées en butées d'extrémités des appareils encliquetés sur le rail.

## Revendications

1. Coffret (10) étanche en matière plastique de logement d'appareillage électrique modulaire (13) comprenant un boîtier (11) inférieur avec un rail à profil symétrique de fixation par encliquetage des appareils modulaires, et un couvercle (12) supérieur qui s'emboîte d'une manière étanche sur le boîtier (11) et qui a sur l'avant une ouverture (15) de passage des faces antérieures desdits appareils (13) portant les manettes (14) de commande et un capot ou fenêtre (28) susceptible de coiffer d'une manière étanche, en position fermée, ladite ouverture (15) et les manettes (14) et en position ouverte de donner accès aux manettes, caractérisé en ce que l'un (27) des bords du capot (28) est articulé audit couvercle (12) à l'extérieur du périmètre de l'ouverture (15) et que le bord opposé porte une patte (30) également à l'extérieur de l'ouverture (15), de support d'un bouton (29) de verrouillage ayant un pène (37) s'engageant sous un rebord (38) du couvercle (12) en position de verrouillage dudit bouton (29), que ladite patte (30) présente un évidement (31) en forme de glissière ou de tiroir dans lequel ledit bouton (29) est monté à coulissement, suivant une direction perpendiculaire audit bord opposé (27), par deux doigts (35) engagés dans ledit évidement (31) et s'étendant dans ladite direction en présentant une élasticité de rapprochement ou d'écartement, que chaque doigt (35) comporte un bec d'extrémité (36), qui coopère avec une rampe (33) agencée sur le bord de la glissière (31) et ayant un point d'inversion (34) de façon que la mise en place du bouton (29) sur la patte (30), par insertion des doigts (35) dans ledit évidement (31), provoque jusqu'au point d'inversion (34), un rapprochement des doigts (35) et au delà du point d'inversion (34), un écartement élastique des doigts (35), lequel écartement sollicite le bouton (29) en position de verrouillage et qu'une butée (40) limite la course de retour du bouton (29), en direction opposée de déverrouillage, afin d'empêcher le franchissement dudit point d'inversion (34) et de conserver une force de rappel du bouton (29) en position de verrouillage.

2. Coffret selon la revendication 1, caractérisé en ce que ladite butée (40) est constituée par une languette élastique disposée sur la trajectoire dudit pène (37) et agencée pour s'effacer par flexion lors de la mise en place du bouton (29) et pour revenir élastiquement en position de butée interférant avec le mouvement de retour du pène.

3. Coffret selon la revendication 1 ou 2, caractérisé en ce que ledit bouton (29) comporte un orifice de plombage (41) venant en position de verrouillage en regard d'un orifice conjugué (42) de plombage prévu sur une patte (43) du couvercle (12) du coffret.

4. Coffret selon la revendication 1, 2 ou 3,caractérisé en ce que le bouton verrou (29) est agencé en une barre prolongeant le capot (28) et de même largeur que ce dernier pour coiffer une partie débordante libre du couvercle (12).

5. Coffret selon l'une quelconque des revendications précédentes, caractérisé en ce que le couvercle (12) et le boîtier (11) sont assemblés par des vis (16) dont la tête (48) présente un orifice (49) s'étendant dans la direction de la vis et débouchant du côté de la face d'appui de la tête de la vis dans un conduit (50) incurvé ménagé dans le couvercle (12) et/ou le boîtier (11) pour permettre le passage du fil de plombage (51) par la tête (48) et le couvercle (12) en étant dévié vers l'extérieur.

6. Coffret selon l'une quelconque des revendications précédentes, caractérisé en ce que le bouton de verrouillage (29) présente un logement (44) pour la mise en place d'une serrure (45), lequel logement vient en regard d'un orifice du couvercle (12) en position de verrouillage du bouton pour le passage du pène (46) de la serrure.

7. Coffret selon l'une quelconque des revendications précédentes, caractérisé en ce que le fond du boîtier (11) porte en bordure de l'une des parois deux colonnettes (55) de hauteur inférieure à celle de la paroi du boîtier pour la fixation d'une barrette (53) repliée en forme de cadre à base ouverte, occupant toute la largeur du boîtier (11), laquelle barrette sert de support à un bornier (52).

8. Coffret selon l'une quelconque des revendications 1 à 6, caractérisé en ce que le fond du boîtier (11) porte en bordure de l'une des parois deux colonnettes (55) de hauteur inférieure à celle de la paroi du boîtier pour la fixation d'un support isolant (56) moulé de support d'un bornier de connexion (52).

9. Coffret selon l'une quelconque des revendications précédentes, caractérisé en ce que le capot (28) est en matière plastique transparente.

10. Coffret selon l'une quelconque des revendications précédentes, caractérisé en ce que le rail à profil symétrique est réglable en profondeur et peut occuper deux positions distinctes grace à des rehausses de fixation au fond du boîtier, aménagées en butées d'extrémités des appareils encliquetés sur le rail.

## Patentansprüche

1. Dichtgeschlossenes Kunststoff-Installationsgehäuse (10) zur Aufnahme modularer elektrischer Schaltgeräte (13), das aus einem Gehäuseunterteil (11) mit einer symmetrischen Profilschiene zur Aufschnappmontage der modularen Schaltgeräte, einer dicht auf das Gehäuseunterteil (11) aufgesetzten Abdeckhaube (12), deren Vorderseite eine Aussparung (15) zur Durchführung der Frontseiten der genannten, mit Betätigungshebeln (14) bestückten Schaltgeräte (13) aufweist, und einem Deckel oder. Sichtfenster (28) besteht, die dazu dienen, in der Schließstellung einen dichten Verschluß für die genannte Aussparung (15) sowie für die Betätigungshebel (14) zu bilden und in der Öffnungsstellung den Zugang zu den Betätigungshebeln zu gestatten, dadurch gekennzeichnet, daß eine Kante (27) des Deckels (28) außerhalb der Begrenzungslinien der Aussparung (15) an die genannte Abdeckhaube (12) angelenkt ist, und daß an der gegenüberliegenden Kante, ebenfalls außerhalb der Begrenzungslinien der Aussparung (15), eine Lasche (30) zur Aufnahme einer Verriegelungsklinke (29) angebracht ist, mit einem Riegel (37), der in der Verriegelungsstellung der genannten Klinke (29) unter einen in der Abdeckhaube (12) ausgebildeten Absatz (38) greift, daß die genannte Lasche (30) eine als Führungskanal ausgebildete Ausnehmung (31) aufweist, in der die genannte Klinke (29) in einer senkrecht zur genannten gegenüberliegenden Kante (27) liegenden Ebene gleitend gelagert ist, wobei zwei in der genannten Ebene angeordnete Federbügel (35) in die genannte Ausnehmung (31) eingreifen und federnd zusammengedrückt bzw. gespreizt werden können, daß jeder Federbügel (35) eine Nase (36) aufweist, die mit einer am Rand des Führungskanals (31) ausgebildeten und einen Umkehrpunkt (34) umfassenden Schräge (33) derart zusammenwirkt, daß bei Zusammenführung der Klinke (29) und der Lasche (30) durch das Eingreifen der Federbügel (35) in die genannte Ausnehmung (31) bis zum Erreichen des Umkehrpunkts (34) ein Zusammendrücken und nach dem Passieren des Umkehrpunkts (34) ein elastisches Spreizen der Federbügel (35) erfolgt, wobei die Klinke (29) durch diese Spreizung in Richtung der Verriegelungsstellung beaufschlagt wird, und daß der Rückwärtshub der Klinke (29) in die entgegengesetzte Richtung entsprechend der Entriegelung durch einen Anschlag (40) begrenzt wird, um die Überschreitung des genannten Umkehrpunkts (34) zu verhindern und eine die Klinke (29) in Richtung der Verriegelungsstellung beaufschlagende Rückholkraft aufrechtzuerhalten.

2. Installationsgehäuse nach Anspruch 1, dadurch gekennzeichnet, daß der genannte Anschlag (40) durch eine auf der Bewegungsbahn des genannten Riegels (37) angeordnete Federzunge gebildet ist, die so ausgeführt ist, um sich bei der Einführung der Klinke (29) federnd wegzubiegen und um anschließend in eine Anschlagstellung zurückzufedern, die den Rückwärtshub des Riegels blockiert.

3. Installationsgehäuse nach Anspruch 1 oder 2, dadurch gekennzeichnet, daß die Klinke (29) eine Plombieröffnung (41) aufweist, die in der Verriegelungsstellung gegenüber einer zugeordneten Plombieröffnung (42) liegt, die in einer in der Abdeckhaube (12) des Installationsgehäuse angeordneten Lasche (43) ausgebildet ist.

4. Installationsgehäuse nach Anspruch 1, 2 oder 3, dadurch gekennzeichnet, daß die Verriegelungsklinke (29) als Balken ausgeführt ist, der den Deckel (28) verlängert und die gleiche Breite wie dieser Deckel aufweist, um eine überstehende Freifläche der Abdeckhaube (12) abzudecken.

5. Installationsgehäuse nach irgendeinem der vorhergehenden Ansprüche, dadurch gekennzeichnet, daß die Abdeckhaube (12) und das Gehäuseunterteil (11) durch Schrauben (16) miteinander verbunden sind, deren Kopf (48) eine in Axialrichtung der Schraube verlaufende Öffnung (49) aufweist, die an der Auflagefläche des Schraubenkopfes in einen in der Abdeckhaube (12) und/oder im Gehäuseunterteil (11) ausgebildeten gekrümmten Kanal (50) übergeht, um den Plombierdraht (51) durch den Schraubenkopf (48) und die Abdeckhaube (12) hindurch nach außen führen zu können.

6. Installationsgehäuse nach irgendeinem der vorhergehenden Ansprüche, dadurch gekennzeichnet, daß die Verriegelungsklinke (29) eine Aufnahme (44) zum Einsetzen eines Schlosses (45) aufweist, wobei dieser Aufnahme in der Verriegelungsstellung der Klinke eine in der Abdeckhaube (12) ausgebildete Öffnung gegenüberliegt, in die der Riegel (46) des Schlosses eingreift.

7. Installationsgehäuse nach irgendeinem der vorhergehenden Ansprüche, dadurch gekennzeichnet, daß am Boden des Gehäuseunterteils (11) im Randbereich einer der Seitenwände zwei Sockel (55) angeordnet sind, die eine geringere Höhe aufweisen als die Seitenwände des Gehäuseunterteils und zur Befestigung einer Schiene (53) dienen, die zu einem sich über die gesamte Breite des Gehäuseunterteils (11) erstreckenden Rahmen mit offener Unterseite gebogen ist und als Träger für eine Klemmleiste (52) dient.

8. Installationsgehäuse nach einem der Ansprüche 1 bis 6, dadurch gekennzeichnet, daß am Boden des Gehäuseunterteils (11) im Randbereich einer der Seitenwände zwei Sockel (55) angeordnet sind, die eine geringere Höhe aufweisen als die Seitenwände des Gehäuseunterteils und zur Befestigung eines Isolierstoffträgers (56) für eine Klemmleiste (52) dienen.

9. Installationsgehäuse nach irgendeinem der vorhergehenden Ansprüche, dadurch gekennzeichnet, daß der Deckel (28) aus durchsichtigem Kunststoff besteht.

10. Installationsgehäuse nach irgendeinem der vorhergehenden Ansprüche, dadurch gekennzeichnet, daß die symmetrische Profilschiene höhenverstellbar ist und mit Hilfe von Abstandshaltern in zwei verschiedenen Einbaulagen montiert werden kann, wobei die Abstandshalter auf dem Boden des Gehäuseunterteils befestigt sind und als Endanschläge für die auf die Profilschiene aufgeschnappten Schaltgeräte dienen.

## Claims

1. A sealed cabinet (10) made of plastic material for housing modular electrical switchgear (13) comprising a bottom case (11) with a symmetrical profile rail for clip-on fixing of the modular switchgear, and a top cover (12) which fits tightly on the case (11) and which has on the front an opening (15) for passage of the front panels of said switchgear (13) bearing the operating handles (14) and a cover or window (28) designed to tightly cover said opening (15) and handles (14) in the closed position, and to give access to the handles in the open position, characterized in that one of the edges (27) of the cover (28) is articulated on said cover (12) outside the perimeter of the opening (15) and that the opposite edge bears a lug (30), also outside the opening (15), supporting a locking button (29) having a latch (37) engaging under an edge (38) of the cover (12) in the locked position of said button (29), that said lug (30) presents a recess (31) in the form of a slide in which said button (29) is mounted with sliding, in a direction perpendicular to said opposite edge (27), by two fingers (35) engaged in said recess (31) and extending in said direction and having an elasticity to bring them together or separate them, that each finger (35) comprises an end nose (36) cooperating with a ramp (33) arranged on the edge of the slide (31) and having an inversion point (34) such that engagement of the button (29) on the lug (30), by insertion of the fingers (35) in said recess (31), draws the fingers (35) together up to the inversion point (34) and separates the fingers (35) elastically after the inversion point (34), which separation urges the button (29) to the locked position and that a stop (40) limits the return travel of the button (29), in the opposite unlocking direction, in order to prevent said inversion point (34) from being passed and to maintain a return force of the button (29) in the locked position.

2. The cabinet according to claim 1, characterized in that said stop (40) is formed by an elastic tab located on the trajectory of said latch (37) and arranged to retract by flexion when the button (29) engages and to return elastically to the latching position interfering with the return movement of the latch.

3. The cabinet according to claim 1 or 2, characterized in that said button (29) comprises a sealing orifice (41) coming in the locked position opposite a conjugate sealing orifice (42) arranged on a lug (43) of the cover (12) of the cabinet.

4. The cabinet according to claim 1, 2 or 3, characterized in that the locking button (29) is arranged as a bar extending the cover (28) and of the same width as the latter to cover a free overlapping part of the cover (12).

5. The cabinet according to any one of the above claims, characterized in that the cover (12) and case (11) are assembled by screws (16) whose head (48) has an orifice (49) extending in the direction of the screw and emerging on the same side as the bearing face of the head of the screw in a curved passage (50) arranged in the cover (12) and/or case (11) to allow the sealing wire (51) to pass through the head (48) and cover (12) being guided towards the outside.

6. The cabinet according to any one of the above claims, characterized in that the locking button (29) has a housing (44) for fitting of a keylock (45), which housing comes to face an orifice of the cover (12) in the locked position of the button for passage of the bolt (46) of the keylock.

7. The cabinet according to any one of the above claims, characterized in that the back plate of the case (11) bears at the edge of one of the panels two small pillars (55) of a height smaller than that of the panel of the case for fixing of a folded strip (53) in the form of a frame with an open base, occupying the whole width of the case (11), which strip acts as support for a terminal block (52).

8. The cabinet according to any one of the claims 1 to 6, characterized in that the back plate of the case (11) bears at the edge of one of the panels two small pillars (55) of a height smaller than that of the panel of the case for fixing of a moulded insulating support (56) supporting a connection terminal block (52).

9. The cabinet according to any one of the above claims, characterized in that the cover (28) is made of transparent plastic material.

10. The cabinet according to any one of the above claims, characterized in that the symmetrical profile rail is adjustable in depth and can occupy two distinct positions due to spacers for fixing to the back plate of the case, arranged as end stops for the switchgear clipped onto the rail.
